# EUROPEAN PATENT APPLICATION

(11) **EP 4 851 949 A1**
(43) Date of publication of application: **09.12.2026**
(21) Application number: 24921838.9
(22) Date of filing: 31.12.2024
(51) Int. Cl.: G06V 10/774

(54) **ANOMALY IMAGE GENERATION METHOD, TRAINING SAMPLE GENERATION METHOD, AND DETECTION METHOD**

(30) Priority: 01.02.2024 CN 202410158313
(71) Applicant: Tencent Technology (Shenzhen) Company Limited, Shenzhen, Guangdong 518057 (CN)
(72) Inventor: GAO, Binbin, Shenzhen, Guangdong 518057 (CN)
(74) Representative: Gunzelmann, Rainer
(86) International application number: PCT/CN2024/144394
(87) International publication number: WO 2025/161816

(57) **Abstract**

The present application provides an anomaly image generation method, a training sample generation method for a detection model, a detection method, a related apparatus, an electronic device, and a medium, which are applied to the technical field of computer vision. The anomaly image generation method comprises: inputting a reference anomaly image and an initialized embedding vector into an image generation model to update the initialized embedding vector on the basis of the reference anomaly image, so as to obtain an updated embedding vector; then, inputting a reference normal image and the updated embedding vector into the image generation model to apply the updated embedding vector to the reference normal image, so as to obtain a generated anomaly image. Since the updated embedding vector comprises the anomaly image feature distribution obtained by learning on the basis of the reference anomaly image, the generated anomaly image can reflect the features of the anomaly image in the real world, and further, the generated anomaly image can serve as a negative sample for training a detection algorithm model, thereby facilitating improvement of the detection performance of the detection algorithm model.

## Description

### PRIORITY INFORMATION

This application claims priority to Chinese Patent Application No. 2024101583133, filed with the China National Intellectual Property Administration on February 1, 2024, and entitled "METHOD FOR GENERATING DEFECTIVE-PRODUCT IMAGE, METHOD FOR GENERATING SAMPLE FOR TRAINING DETECTION MODEL, AND DETECTION METHOD".

### FIELD OF THE TECHNOLOGY

Embodiments of the present disclosure relate to the field of computer vision technologies, and in particular, to a method for generating a defective-product image, a method for generating a sample for training a detection model, a detection method, related apparatuses, an electronic device, and a computer-readable storage medium.

### BACKGROUND OF THE DISCLOSURE

As device manufacturing automation upgrades, a normal product (non-defective product) rate on industrial production lines can reach a high level, for example, greater than 90%. Although a defective-product (anomalous-product) rate can reach a low level, high detection accuracy (for example, greater than 98%) is still required to improve overall product quality. An artificial intelligence model can be used to predict whether an industrial product is a good product or a defective product, to improve detection efficiency. Negative samples of defective products are difficult to obtain on a large scale, making an intelligent anomaly detection model a practical and challenging task in industrial quality inspection.

In the related art, a defective-product image is obtained by synthesizing anomaly features of an industrial product with noise or external data and is used as a negative sample to resolve the foregoing problem. However, there is a large semantic gap between the defective-product image obtained through the foregoing synthesis and an image of a real defective product (also called a reference defective-product image), affecting detection performance of the detection model.

### SUMMARY

Embodiments of the present disclosure provide a method for generating a defective-product image, a method for generating a sample for training a detection model, a detection method, related apparatuses, an electronic device, and a computer-readable storage medium. A new defective-product image can be generated to approximate an image of a real defective product. Further, the defective-product image determined based on the solution provided herein is used to train a detection model, thereby facilitating improving detection performance of the detection model.

In a first aspect, a method for generating a defective-product image is provided according to an embodiment of the present disclosure. The method is executable by an electronic device. The method includes: obtaining a reference defective-product image indicating a first object with a first anomaly degree; initializing an embedding vector, where the embedding vector in a multidimensional vector; obtaining a reference normal-product image indicating a second object with a second anomaly degree, the second object and the first object are of a same object type, and the second anomaly degree is lower than the first anomaly degree; updating the initialized embedding vector through an image generation model according to the reference defective-product image to obtain an updated embedding vector; and processing the reference normal-product image through the image generation model according to the updated embedding vector to obtain a new defective-product image.

In embodiments of the present disclosure including the embodiments of both the claims and the specification (hereinafter referred to as "all embodiments of the present disclosure"), updating the initialized embedding vector through an image generation model according to the reference defective-product image, to obtain an updated embedding vector may comprise: optimizing the initial embedding vector through the image generation model according to the reference defective-product image, where parameters of the image generation model remain unchanged during optimization of the initial embedding vector.

In all embodiments of the present disclosure, the image generation model may comprise a pixel-space network and a latent-space network.

Updating the initialized embedding vector through the image generation model according to the reference defective-product image comprises: converting the reference defective-product image into reference defect-product features through an encoder in the pixel-space network; adding noise to the reference defect-product features through a noise adding network in the latent-space network to obtain corresponding noisy features; predicting the noise in the noisy feature through a denoising network in the latent-space network to obtain a predicted noise, where the denoising network is conditioned on the initialized embedding vector through cross-attention; calculating a value of a first objective function using the predicted noise; and updating the initialized embedding vector according to the value of the first objective function to obtain the updated embedding vector.

In all embodiments of the present disclosure, the denoising network may comprise T U-Nets for T denoising operations, respectively, T is a positive integer, and the method further comprises: determining a j^{th} key vector according to the initial embedding vector and a first parameter of a j^{th} U-Net among the T U-Nets, where j is a positive integer less than or equal to T; determining a j^{th} value vector according to the initial embedding vector and a second parameter of the j^{th} U-Net; and calculating an attention of the j^{th} U-Net according to the j^{th} key vector and the j^{th} value vector.

In all embodiments of the present disclosure, calculating the value of the first objective function using the predicted noise may comprise: calculating the value of the first objective function according to predicted noise and a Gaussian noise. Updating the parameters in the initialized embedding vector according to the value of the first objective function to obtain the updated embedding vector comprises: adjusting the parameters in the initialized embedding vector through minimizing the first objective function, where the adjusted embedding vector serves as the updated embedding vector when the first objective function is minimized.

In all embodiments of the present disclosure, updating the initialized embedding vector through the image generation model according to the reference defective-product image to obtain the updated embedding vector may comprise: inputting the reference defective-product image and an image mask into an image generation model; calculating a value of a second objective function according to a feature extracted from a part of the reference defective-product image exposed by the image mask, where the parameters of the image generation model remain unchanged during calculation of the value of the second objective function; and updating parameters of the initial embedding vector according to the value of the second objective function to obtain the updated embedding vector, where a product defect in the reference defective-product image is located in the part exposed by the image mask.

In all embodiments of the present disclosure, calculating the value of the second objective function according to the feature extracted from the part of the reference defective-product image exposed by the image mask may comprise: determining a difference between a Gaussian noise and a noise predicted by a denoising network in the image generation model; and determining the value of the second objective function according to the difference and the extracted feature. Updating the parameters of the initial embedding vector according to the value of the second objective function to obtain the updated embedding vector comprises: adjusting the parameters in the initialized embedding vector through minimizing the second objective function, where the adjusted initialized embedding vector serves as the updated embedding vector when the second objective function is minimized.

In all embodiments of the present disclosure, processing the reference normal-product image through the image generation model using the updated embedding vector to obtain the new defective-product image may comprise: processing the reference normal-product image through the image generation model using the updated embedding vector and a bounding box to obtain the new defective-product image, where the parameters of the image generation model remain unchanged during processing of the reference normal-product image, and the bounding box is configured for indicating a region, in which a product defect is located, in the new defective-product image.

In all embodiments of the present disclosure, processing the reference normal-product image through the image generation model using the updated embedding vector to obtain the new defective-product image may comprise: inputting the reference normal-product image into the image generation model; adding noise to the reference normal-product image successively for T noise-adding iterations through a noise adding network in the image generation model to obtain a noisy feature of the reference normal-product image, where T is a positive integer, and for each t being a positive integer smaller than or equal to T-1, an output of a t^{th} noise-adding iteration is an input of a (t+1)^{th} noise-adding iteration among the T noise-adding iterations; denoising the noisy feature successively for T denoising iterations corresponding to the T noise-adding iterations, respectively, through a denoising network guided by the updated embedding vector to obtain a denoised feature, where a result of the denoising iteration corresponding to the t^{th} noise-adding iteration comprises a first part and a second part, the first part is a part located outside of the boundary box in the output of the t^{th} noise-adding iteration, and the second part is a part of a result of denoising the result of the denoising iteration corresponding to the (t+1)^{th} noise-adding iteration; and decoding the denoised feature through a decoder of a pixel-space network in the image generation model to obtain the new defective-product image.

In a second aspect, an apparatus for generating a defective-product image is provided. The apparatus is arranged in an electronic device. The apparatus includes: a first obtaining module, configured for obtaining a reference defective-product image indicating a first object with a first anomaly degree; a second obtaining module, configured for initializing an embedding vector configured for representing a product defect, where the embedding vector in a multidimensional vector; a third obtaining module, configured for obtaining a reference normal-product image indicating a second object with a second anomaly degree, the second object and the first object are of a same object type, and the second anomaly degree is lower than the first anomaly degree; a first processing module, configured for updating the initialized embedding vector through an image generation model according to the reference defective-product image to obtain an updated embedding vector; and a second processing module, configured for processing the reference normal-product image through the image generation model using the updated embedding vector to obtain a new defective-product image.

In all embodiments of the present disclosure, the first processing module may be configured for: optimizing the initial embedding vector through the image generation model according to the reference defective-product image, where parameters of the image generation model remain unchanged during optimization of the initial embedding vector.

In all embodiments of the present disclosure, the image generation model comprises a pixel-space network and a latent-space network.

The first processing module comprises: a first input unit, a denoising unit, a first determining unit, and a second determining unit.

The first input unit is configured for: converting the reference defective-product image into a reference defect-product feature through an encoder in the pixel-space network, and adding noise into the reference defect-product feature through a noise adding network in the latent-space network to obtain a noisy feature. The denoising unit is configured for predicting the noise in the noisy feature through a denoising network in the latent-space network to obtain a predicted noise, where the denoising network is conditioned on the initialized embedding vector through cross-attention. The first determining unit is configured for calculating a value of a first objective function using the predicted noise. The second determining unit is configured for updating parameters in the initialized embedding vector according to the value of the first objective function to obtain the updated embedding vector.

In all embodiments of the present disclosure, the denoising network may comprise T U-Nets for T denoising operations, respectively, T is a positive integer. The second obtaining module further comprises a mapping unit configured for: determining a j^{th} key vector according to the initial embedding vector and a first parameter of a j^{th} U-Net among the T U-Nets, where j is a positive integer less than or equal to T; determining a j^{th} value vector according to the initial embedding vector and a second parameter of the j^{th} U-Net; and calculating an attention of the j^{th} U-Net according to the j^{th} key vector and the j^{th} value vector.

In all embodiments of the present disclosure, the first determining unit may be configured for calculating the value of the first objective function according to predicted noise and a Gaussian noise. The second determining unit is configured for: adjusting the parameters in the initialized embedding vector through minimizing the first objective function, where the adjusted embedding vector serves as the updated embedding vector when the first objective function is minimized.

In all embodiments of the present disclosure, the first processing module may comprise a second input unit, a third determining unit, and a fourth determining unit. The second input unit is configured for inputting the reference defective-product image and an image mask into an image generation model. The third determining unit is configured for calculating a value of a second objective function according to a feature extracted from a part of the reference defective-product image exposed by the image mask, where the parameters of the image generation model remain unchanged during calculation of the value of the second objective function. The fourth determining unit is configured for: updating parameters of the initial embedding vector according to the value of the second objective function to obtain the updated embedding vector. A product defect in the reference defective-product image is located in the part exposed by the image mask.

In all embodiments of the present disclosure, the third determining unit may be configured for: determining a difference between a Gaussian noise and a noise predicted by a denoising network in the image generation model; and determining the value of the second objective function according to the difference and the extracted feature. The fourth determining unit is configured for adjusting the parameters in the initialized embedding vector through minimizing the second objective function, where the adjusted initialized embedding vector serves as the updated embedding vector when the second objective function is minimized.

In all embodiments of the present disclosure, the second processing module may be configured for processing the reference normal-product image through the image generation model using the updated embedding vector and a bounding box to obtain the new defective-product image, where the parameters of the image generation model remain unchanged during processing of the reference normal-product image, and the bounding box is configured for indicating a region, in which a product defect is located, in the new defective-product image.

In all embodiments of the present disclosure, the second processing module may comprise a first generation unit and a second generation unit. The first generation unit is configured for: inputting the reference normal-product image into the image generation model; adding noise to the reference normal-product image successively for T noise-adding iterations through a noise adding network in the image generation model to obtain a noisy feature of the reference normal-product image, where T is a positive integer, and for each t being a positive integer smaller than or equal to T-1, an output of a t^{th} noise-adding iteration is an input of a (t+1)^{th} noise-adding iteration among the T noise-adding iterations; and denoising the noisy feature successively for T denoising iterations corresponding to the T noise-adding iterations, respectively, through a denoising network guided by the updated embedding vector to obtain a denoised feature, where a result of the denoising iteration corresponding to the t^{th} noise-adding iteration comprises a first part and a second part, the first part is a part located outside of the boundary box in the output of the t^{th} noise-adding iteration, and the second part is a part of a result of denoising the result of the denoising iteration corresponding to the (t+1)^{th} noise-adding iteration. The second generation unit is configured for decoding the denoised feature through a decoder of a pixel-space network in the image generation model to obtain the new defective-product image.

In a third aspect, a method for generating a sample for training a detection model is provided. The method is executable by an electronic device. The method includes: determining a positive sample image; and determining a negative sample image through any method in the first aspect, where the positive sample image is the reference normal-product image of the second object, the negative sample image is the new defective-product image of the first object; and where the first object and the second object are of the same object type, and the anomaly degree of the second object is lower than the anomaly degree of the first object.

In a fourth aspect, an apparatus for generating a sample for training a detection model is provided. The apparatus is arranged in an electronic device. The apparatus includes: a first determining module, configured for determining a positive sample image; and a second determining module, configured for determining a negative sample image through any method in the first aspect; where the positive sample image is the reference normal-product image of the second object, the negative sample image is the new defective-product image of the first object; and where the first object and the second object are of the same object type, and the anomaly degree of the second object is lower than the anomaly degree of the first object.

In a fifth aspect, a detection method is provided. The method is executable by an electronic device. The method includes: detecting a to-be-tested object through a detection model to obtain a detection result, where the detection model is trained through the method in the third aspect; where the detection result comprises whether the to-be-tested object is a first object or a second object, and the detection result further comprises a position of a product defect when the to-be-tested object is the first object; and where the first object and the second object are of the same object type, and the anomaly degree of the second object is lower than the anomaly degree of the first object.

In a sixth aspect, a detection apparatus is provided. The apparatus is arranged in an electronic device. The apparatus includes: a detecting module, configured for detecting a to-be-tested object through a detection model to obtain a detection result, where the detection model is trained through the method in the third aspect; where the detection result comprises whether the to-be-tested object is a first object or a second object, and the detection result further comprises a position of a product defect when the to-be-tested object is the first object; and where the first object and the second object are of the same object type, and the anomaly degree of the second object is lower than the anomaly degree of the first object.

In a seventh aspect, an electronic device is provided, including a processor and a memory. The memory is configured to store a computer program, and the processor is configured to invoke and execute the computer program stored in the memory, to perform the method for generating a defective-product image in the first aspect and implementations thereof, perform the method for generating a sample for training a detection model according to the third aspect, or perform the detection method according to the fifth aspect.

In an eighth aspect, a chip is provided, configured to implement the method according to the first aspect or implementations thereof. Specifically, the chip includes: a processor, configured to invoke and execute a computer program from a memory, to enable a device installed with the chip to perform the method for generating a defective-product image according to the first aspect and implementations thereof, perform the method for generating a sample for training a detection model according to the third aspect, or perform the detection method according to the fifth aspect.

In a ninth aspect, a computer-readable storage medium is provided, configured to store a computer program. The computer program causes a computer to perform the method for generating a defective-product image according to the first aspect and implementations thereof, perform the method for generating a sample for training a detection model according to the third aspect, or perform the detection method according to the fifth aspect.

According to a tenth aspect, a computer program product is provided, including computer program instructions. The computer program instructions cause a computer to perform the method for generating a defective-product image according to the first aspect and implementations thereof, perform the method for generating a sample for training a detection model according to the third aspect, or perform the detection method according to the fifth aspect.

According to an eleventh aspect, a computer program is provided. The computer program, when executed on a computer, causes the computer to perform the method for generating a defective-product image according to the first aspect and implementations thereof, perform the method for generating a sample for training a detection model according to the third aspect, or perform the detection method according to the fifth aspect.

Herein the initial embedding vector is updated through the image generation model according to the reference defective-product image to obtain the updated embedding vector. The first object in the reference defective-product image has the first anomaly degree, and the embedding vector is the numerical vector configured for representing the product defect in the image. The reference normal-product image is then processed through the image generation model according to the updated embedding vector, such that the updated embedding vector to the reference normal-product image is applied to obtain the new defective-product image. The reference normal-product image shows the second object, the second object and the first object belong to the same object type, and the second object has the second anomaly degree lower than the first anomaly degree. Because the updated embedding vector can reflect characteristics of the real defective-product image(s) for objects of this type, the new defective-product image obtained through applying the updated embedding vector to the reference normal-product image carries the characteristics of the real defective-product images. Further, the new defective-product image can be used as a negative sample for training a detection model, thereby facilitating improving detection performance of the detection model.

### BRIEF DESCRIPTION OF THE DRAWINGS

FIG. 1 is a schematic diagram of a system framework applicable to an embodiment of the present disclosure.
FIG. 2 is a schematic flowchart of a method for generating a defective-product image according to an embodiment of the present disclosure.
FIG. 3 is a schematic flowchart of obtaining an updated embedding vector according to an embodiment of the present disclosure.
FIG. 4 is a schematic flowchart of a process of obtaining an updated embedding vector according to an embodiment of the present disclosure.
FIG. 5 is a schematic flowchart of obtaining an updated embedding vector according to another embodiment of the present disclosure.
FIG. 6 is a schematic flowchart of obtaining an updated embedding vector according to another embodiment of the present disclosure.
FIG. 7 is a schematic flowchart of obtaining an updated embedding vector according to another embodiment of the present disclosure.
FIG. 8 is a schematic flowchart of obtaining a new defective-product image using an updated embedding vector according to an embodiment of the present disclosure.
FIG. 9 is a schematic flowchart of obtaining a new defective-product image using an updated embedding vector according to another embodiment of the present disclosure.
FIG. 10 is a schematic flowchart of obtaining a new defective-product image using an updated embedding vector according to another embodiment of the present disclosure.
FIG. 11 is a schematic diagram of generating negative samples for a detection model based on a small quantity of reference defective-product images according to an embodiment of the present disclosure.
FIG. 12 is a schematic structural diagram of an apparatus for generating a defective-product image according to an embodiment of the present disclosure.
FIG. 13 is a schematic structural diagram of an apparatus for generating a sample for training a detection model according to an embodiment of the present disclosure.
FIG. 14 is a schematic structural diagram of a detection apparatus according to an embodiment of the present disclosure.
FIG. 15 is a schematic structural diagram of an electronic device according to an embodiment of the present disclosure.

### DESCRIPTION OF EMBODIMENTS

Technical solutions in embodiments of the present disclosure are clearly and completely described below with reference to the accompanying drawings in the embodiments of the present disclosure. It is clear that the embodiments described are merely some rather than all of the embodiments of the present disclosure. All other embodiments obtained by a person of ordinary skill in the art based on the embodiments of the present disclosure without making creative efforts fall within the protection scope of the present disclosure.

In the specification, claims, and accompanying drawings of the present disclosure, the terms "first", "second", and the like are intended to distinguish between similar objects, but do not necessarily indicate a specific order or sequence. Data used in this way is exchangeable in a proper case, so that the embodiments of the present disclosure described herein can be implemented in an order different from the order shown or described herein. In the embodiments of the present disclosure, "B corresponding to A" indicates that B is associated with A. In an implementation, B may be determined based on A. However, determining B based on A does not mean that B is determined based on only A. Instead, B may be determined based on A and/or other information. In addition, the terms "include", "have", and any variants thereof are intended to cover a non-exclusive inclusion. For example, a process, method, system, product, or device that includes a list of steps or units is not necessarily limited to those expressly listed steps or units but may include other steps or units not expressly listed or inherent to such a process, method, product, or device. In addition, in the descriptions of the present disclosure, unless otherwise specified, "a plurality of" means two or more.

In the embodiments of the present disclosure, the term "module" or "unit" refers to a computer program with a predetermined function or a part of the computer program that works, together with other related parts, to implement a predetermined target, and may be completely or partially implemented by using software, hardware (for example, a processing circuit or a memory) or a combination thereof. Similarly, a processor (or a plurality of processors or memories) may be configured to implement one or more modules or units. In addition, each module or unit may be a part of an overall module or unit including the module or unit function.

The solutions according to the embodiments of the present disclosure relate to artificial intelligence-based technologies such as computer vision and machine learning and are specifically described by using the following embodiments.

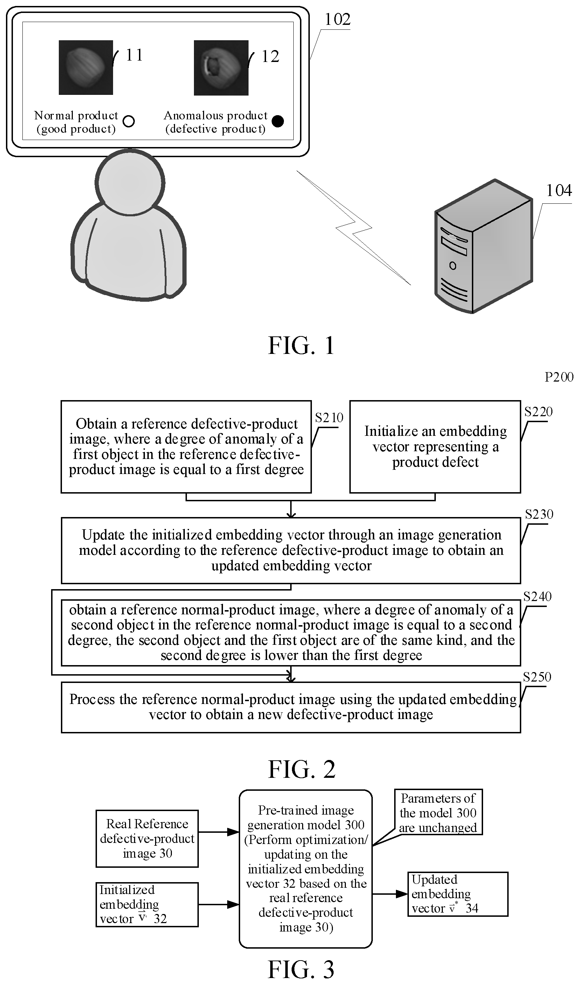

FIG. 1 is a schematic diagram of a system framework applicable to an embodiment of the present disclosure. As shown in FIG. 1, a hazelnut is taken as an example to a kind (type) of an object (also called a product herein) in the images. An image 11 represents a normal product of the hazelnut, also referred to as a non-defective product, that is, a product substantially having no defects or having defects that are difficult to directly identify by the naked eye. An image 12 represents a defective product of the hazelnut, also referred to as an anomalous product, that is, a product having visible defects. Here the image of the defective product may be recorded as a "defective-product image". The image 11 may be regarded as an image of a second object having a second degree of anomaly (hereinafter also called "anomaly degree"), and the image 12 may be regarded as an image of first object having a first anomaly degree. The second anomaly degree is lower than the first anomaly degree. Measurement for the anomaly degree is related to the kind of the object. For example, if the kind of the object is a hazelnut, the anomaly degree may be a ratio of a damaged surface area of the hazelnut to a total surface area of this hazelnut. The second anomaly degree may be the ratio being less than 1%, the first anomaly degree may be the ratio being greater than 10%, and the like.

Because negative samples of defective products are difficult to obtain on a large scale, in the related art, an unsupervised anomaly detection model is used to perform intelligent detection on an industrial product. The unsupervised detection model usually uses only features of a normal-product image to learn a normal distribution or reconstruct normal features to perform anomaly detection. A lack of discriminative representations leads to suboptimal performance and inability to localize an anomaly region in the defective product, for example, inability to implement pixel-level anomaly localization. To address the issue of inability to position the anomaly region, in the related art, a defective-product image obtained through synthesis is used as a negative sample for a supervised intelligent detection algorithm. For example, in the paper "Draem: a discriminatively trained reconstruction embedding for surface anomaly detection", an external texture data set is used to construct a defective-product image. In the paper "Cutpaste: Self-supervised learning for anomaly detection and localization", image patches are randomly cropped and pasted onto other parts, to create a defective-product image. In the paper "Simplenet: A simple network for image anomaly detection and localization", a feature map is directly perturbed to simulate features of a defective-product image. There is a significant distribution gap between a synthesized defective-product image or features and a real defective-product image or features. Detection performance of a model trained by using the synthesized defective-product image as a negative sample is to be improved. Herein the defective-product image obtained through manufacturing and synthesis, that is, a defective-product image not determined by using actual image features of the anomalous product or the defective product, is called the "synthesized defective-product image". There is a significant distribution gap between the "synthesized defective-product image" and the real defective-product image or features.

For the foregoing technical problem in the related art, in this embodiment of the present disclosure, anomaly semantic features in a reference defective-product image are learned through an embedding vector, and a new defective-product image is further obtained based on the updated embedding vector. In this embodiment of the present disclosure, the defective-product image determined by using the actual image features of the defective product or the defective product is recorded as the "new defective-product image". The "new defective-product image" can reflect the real defective-product image or features.

In all embodiments of the present disclosure, a server 104 may be equipped with a pre-trained image generation model. A user may input a reference defective-product image and an initial embedding vector into the pre-trained image generation model through a terminal 102. Further, the parameters of the image generation model remain unchanged, while the server 104 is controlled to update values of parameters of the initial embedding vector based on the reference defective-product image to learn a feature distribution of the reference defective-product image (which may be referred to as anomaly semantic features), so as to obtain the updated embedding vector representing a feature distribution of the defective-product image. Instead of optimizing the image generation model with a large quantity of parameters, the embedding vector having a small quantity of parameters is optimized. Therefore, a small number of reference defective-product images are sufficient to meet a requirement of the defective-product image generation process, which is easy to implement.

In all embodiments of the present disclosure, after the updated embedding vector is determined, the user may further input a reference normal-product image and the updated embedding vector into the image generation model through the terminal 102. Because the updated embedding vector has the semantic features of the "anomaly", which are learned through the reference defective-product image, the defective-product-image features learned through the updated embedding vector can be applied to the reference normal-product image to obtain a new defective-product image. The new defective-product image may be used as a negative sample for training a detection model, thereby facilitating improving detection performance of the detection model.

Hence, negative samples of an anomaly detection model can be generated, thereby addressing the issue that negative samples of defective products are difficult to obtain on a large scale. In addition, in comparison with the synthesized defective-product image, a semantic gap between the generated defective-product image and the real defective-product image (the reference defective-product image) is reduced, thereby facilitating improving detection performance of the detection model, and making the trained model more robust.

In all embodiments of the present disclosure, the server 104 may be equipped with the trained detection model, and after the user inputs a to-be-tested image through the terminal 102, anomaly detection is performed on the to-be-tested image through the server 104. Further, a detection result may be displayed on the terminal 102 for the user to view. The detection result, as shown in FIG. 1, may be that the object in the image is the second object (that is, a defective product or a defective product) or the first object (a normal product or a good product). As an example, whether a circular identifier is solid is used to represent a predicted category of the object in the current to-be-tested image.

The terminal 102 may be a smartphone, a tablet, a smart audio/video interactive device, a smart home appliance, an in-vehicle terminal, an aircraft, a wearable smart device, a medical device, or the like. As described above, the terminal 102 is usually configured with a display apparatus. The display apparatus may also be a monitor, a display screen, a touchscreen, or the like. The touchscreen may also be a touch-sensitive screen, a touch panel, or the like. However, this is not limited thereto. The server 104 may be an independent physical server, or may be a server cluster including a plurality of physical servers or a distributed system, or may be a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. The terminal may be a smartphone, a tablet computer, a notebook computer, a desktop computer, a smart speaker, a smartwatch, or the like, but is not limited thereto. The terminal 102 and the server 104 may be directly or indirectly connected in a wired or wireless communication manner. This is not limited herein in this embodiment of the present disclosure.

The technical solutions of the present disclosure are described in detail below by using some embodiments. The following embodiments may be combined with each other as long as there is no conflict therebetween. The same or similar concepts or processes may not be repeated between some embodiments.

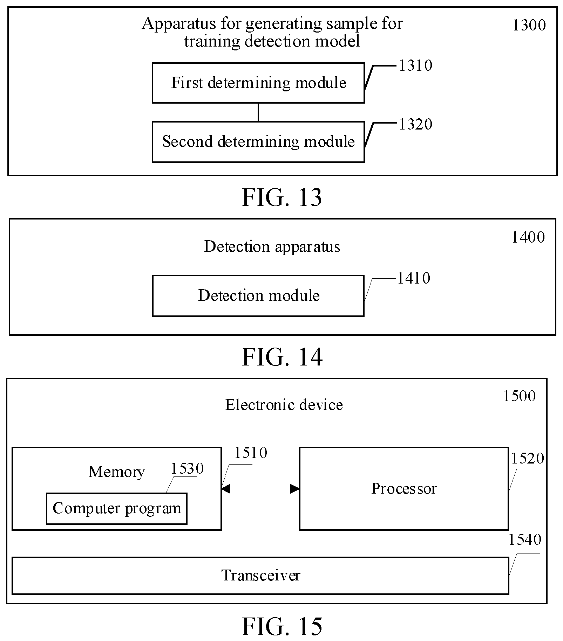

FIG. 2 is a schematic flowchart of a method for generating a defective-product image P200 according to an embodiment of the present disclosure. The method P200 may be performed by a server, such as the server 104 in FIG. 1, or may be the terminal 102 as shown in FIG. The terminal may be an electronic device storing a related algorithm, such as an electronic device 1500 as shown in FIG. 15. Here the method P200 is described by using an example in which the method P200 is performed by an electronic device. Referring to FIG. 2, the method P200 includes S210 to S250.

S210: Obtain a reference defective-product image indicating a first object with a first anomaly degree.

The reference defective-product image shows a real anomaly of an object, that is, the image has features reflecting the real anomaly of the object.

As described above, a criterion for measuring the anomaly degree is related to the kind of the object and may be predefined, and higher anomaly degree indicates more severe defect. Using a hazelnut as an example of the kind, an anomaly degree of the hazelnut may be measured according to a ratio of an area of a defective surface of the hazelnut to a total area of a surface of the hazelnut. In all embodiments of the present disclosure, when an anomaly degree of the object (such as the first object) is higher than or equal to a preset anomaly degree, it may be considered that the defect of the object is visible to the naked eye, and the object belongs to a defective product or an anomalous product in this kind. An example may be the hazelnut image 12 as shown in FIG. 1. Additionally or alternatively, when the anomaly degree of the object (for example, a second object below) is lower than or equal to another preset anomaly degree, it may be considered that the object does not have defects visible to the naked eye and thus belongs to a normal product or a good product in this kind. An example may be the hazelnut image 11 as shown in FIG. 1.

In all embodiments of the present disclosure, the reference defective-product image may be obtained by capturing an image of the first object (for example, the hazelnut image 12 as shown in FIG. 1), that is, it is an image of the first object. The reference normal-product image illustrated below shows the second object (for example, the hazelnut image 11 as shown in FIG. 1) , that is, it is an image of the second object. As an example, it may be obtained by capturing an image of the second object.

The first object and the second object belong to the same object type (i.e., they are the same kind of object). For example, they are both hazelnuts.

S220: Initialize an embedding vector representing a product defect. Here the embedding vector may be a multidimensional vector.

The embedding vector may be a numerical vector. Here image features (specifically, semantic features of the defect) in the reference defective-product image are learned through the embedding vector. As an example, the initialization refers to setting parameters of the embedding vector to initial values or creating an initial embedding vector consisting of initial values, i.e., the parameters of the initialized embedding vector are all initial values (for example, 0). The values of the parameters in the embedding vector would be updated with reference to the reference defective-product image, so that the updated embedding vector "learns" semantic features that can reflect a real defect of the current object.

In S230: Update the initialized embedding vector through an image generation model according to the reference defective-product image to obtain an updated embedding vector.

FIG. 3 is a schematic flowchart of obtaining an updated embedding vector according to an embodiment of the present disclosure. Referring to FIG. 3, in all embodiments of the present disclosure, a reference defective-product image 30 and an initial embedding vector 32 may be input into a pre-trained image generation model 300. The image generation model 300 is configured to update the initial embedding vector 32 according to the reference defective-product image 30 under a premise that parameters of the image generation model are unchanged in the updating process, so as to obtain an optimized embedding vector 34 (also called the updated embedding vector). When there are only a limited number of the reference defective-product images 30, it is impractical to optimize the image generation model having millions of parameters to let the model learn the semantic features of the real defect on the current object. On the contrary, the embedding vector has a small quantity of parameters (for example, including only hundreds of parameters) is updated, and letting the embedding vector learn the semantic features of the defect anomaly leads to a simple optimization process. That is, a requirement for optimizing the embedding vector can be satisfied even if the quantity of the reference defective-product images is limited. The solution provided herein focuses on learning embeddings that can capture semantic features of the real defect effectively, rather than relying on fine-tuning a complex model.

As an example, the image generation model may be a diffusion model (DM), a latent diffusion model (LDM), or another type of generative model. This is not limited herein.

Herein the method for generating the defective-product image i is implemented based on the pre-trained image generation model. A pre-training process of the image generation model is described below by using an example in which the image generation model is a diffusion model. The diffusion model is a kind of a generative model that generates a new sample by adding noise to data step-by-step (also called iteration-by-iteration) and then learning to reverse this process.

In all embodiments of the present disclosure, the pre-training process of the diffusion model for executing an image generation task may include operation S31 to operation S36.

Operation S31: Determine a forward diffusion process. As an example, a discrete time step and a noise scheduling function may be determined.

The discrete time step is determined such that the entire process can be divided into T discrete time steps, where t = 1, 2, ..., T. At each time step t, Gaussian noise is added into current data (e.g., the current image or the current image feature) according to a noise level. The noise scheduling function is configured for controlling an amount of noise added at each step (also called iteration). The scheduling may be linear scheduling, cosine scheduling, or the like.

Operation S32: Determine a reverse generation process. As an example, a denoising network may be determined, and the reverse process is parameterized.

To reverse the forward diffusion process, a neural network (which may be specifically a deep convolutional neural network) needs to be constructed. The network is configured for predicting noise in a given noisy image, and it attempts to remove the noise to restore the original image. An objective of the parameterized reverse process is to learn a reverse process, which may be expressed as q(xₜ₋₁ | xₜ) ≈ p*_{θ}*(xₜ₋₁ | xₜ). Given a noisy image xₜ, the image xₜ₋₁ that is one time step previous to xₜ (in the noise adding process) is predicted, or the noise ε is directly predicted for the corresponding time step.

Operation S33: Construct a loss function. For example, the loss function may be a mean squared error loss function that aims to minimize a difference between the predicted noise and the actual noise. As an example, for each time step t, a mean squared error between the predicted noise and the real noise ε is computed.

Operation S34: Perform the pre-training.

Operation S34-1: Collect a training set. The training set may comprise a large quantity of high-quality images to ensure that the data set is sufficiently diverse, so that the model can learn a wide range of data distribution features.

Operation S34-2: In each iteration, extract a batch of images randomly from the training set, and apply the forward diffusion process to this batch of images to generate samples at different noise levels.

Operation S34-3: Compute a gradient of the loss (i.e., the value of the loss function) with respect to the model parameters by using a back propagation algorithm and update the parameters by using an optimizer (such as Adam), such that weights of the model are gradually adjusted to reduce the loss.

Operation S34-4: Repeat the operations S34-2 and S34-3 for several times, until the model converges or a predetermined maximum quantity of iterations is reached. During the training, the model gradually learns how to effectively remove the noise and reconstruct a clear image.

Operation S35: Generate a new image through sampling.

In this step, pure noise (for example, a random vector sampled from a standard normal distribution) serves as an input. Then, denoising is performed step by step (hereinafter the step may also be called iteration). For example, the noise is reduced step by step using the reverse generation process, where each step depends on a result of the previous step. After T steps, a completely new synthesized image can be finally outputted.

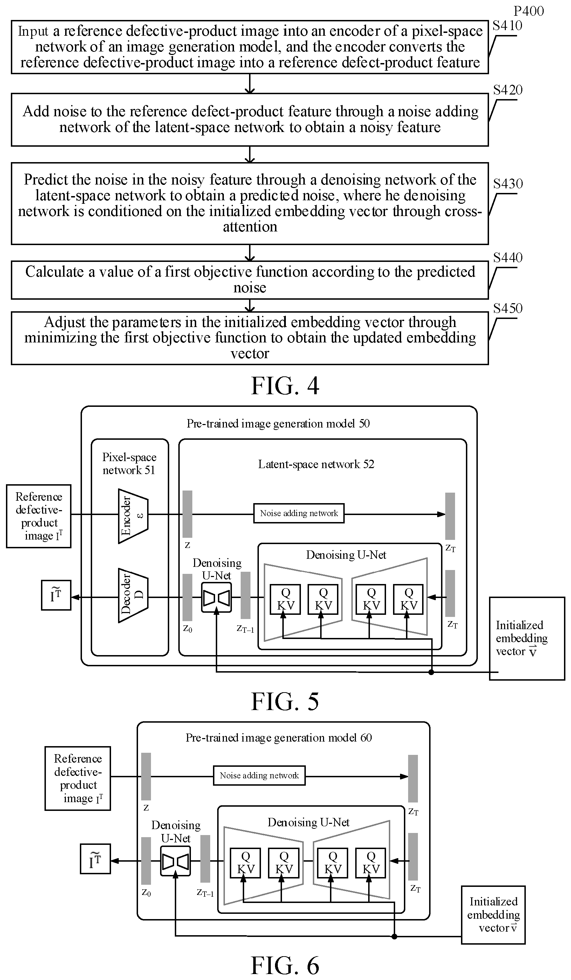

FIG. 4 is a schematic flowchart of a method P400 for obtaining an updated embedding vector according to an embodiment of the present disclosure. In all embodiments of the present disclosure, operation 230 may be implemented as a process P400. The process P400 may be performed by a server, such as the server 104 as shown in FIG. 1, may be performed by the terminal 102 as shown in FIG. 1, or may be performed by an electronic device storing a related algorithm, such as an electronic device 1500 as shown in FIG. 15. The method P400 is described by using an example in which the method P400 is performed by an electronic device. Referring to FIG. 4, the embodiment shown in the figure includes S410 to S450.

In S410, the electronic device inputs a reference defective-product image into an encoder of a pixel-space network of an image generation model, and the encoder converts the reference defective-product image into a reference defect-product feature.

As an example, the image generation model comprises a latent diffusion model for optimization (i.e., update) of the embedding vector. Referring to FIG. 5, in all embodiments of the present disclosure, the image generation model 50 may include a pixel-space network 51 and a latent-space network 52. The pixel-space network 51 includes a pre-trained autoencoder, and the autoencoder includes an encoder ε and a decoder D. An input image may be compressed through the encoder ε, then the diffusion is performed in a latent space (also called a latent representation space). Afterwards, image reconstruction is performed through the decoder D to restore the image back to the pixel-space network. Here the image is transferred to the latent-space network for noise addition and denoising, so that only important and basic features are retained and imperceptible high-frequency information in the image can be neglected. It greatly reduces computational complexity in training and sampling stages, enables image generation on consumer-grade GPUs in approximately 10 seconds, and greatly lowers the barrier to practical implementation.

As an example, reference is made to FIG. 5. A reference defective-product image I^{T} is inputted into the pixel-space network 51, and after the reference defective-product image is encoded by the encoder ε, the reference defect-product feature z in the latent-space network 52 are obtained, which may also be denoted as ε(I^{T}).

In S420, the electronic device adds noise to the reference defect-product feature through a noise adding network of the latent-space network to obtain a noisy feature. Here the noisy feature corresponds to the reference defect-product features.

As an example, reference is made to FIG. 5. The reference defect-product feature z is processed through the noise adding network of the latent-space network 52 to obtain noisy feature z_{T} corresponding to the reference defect-product feature.

In all embodiments of the present disclosure, there may be one or more reference defective-product images. For example, the quantity of the reference defective-product images may range from one to ten. In a case that more than one reference defective-product image is provided, the multiple reference defective-product images input into the image generation model as a batch may have defects of the same type. For example, using a hazelnut as an example, the anomalous hazelnuts are hazelnuts having defects. Types of the defects may include: a crack or abrasion due to compression, a damage due to insect infestation, or the like. In order to enable the embedding vector to learn the semantic features of the real defective product, the reference defective-product images having the same type of defect are inputted into the model. For example, different defective-product images all showing hazelnuts having cracks due to compression are input into the pre-trained image generation model as a batch, so that the embedding vector can "learn" the semantic features of the crack due to compression.

In S430, the electronic device predicts the noise in the noisy feature through a denoising network of the latent-space network to obtain a predicted noise, where the denoising network is conditioned on the initialized embedding vector through cross-attention (i.e., in a cross-attention mechanism) during the denoising process.

As an example, the denoising network of the latent-space network is first "injected" into the initial embedding vector via a cross-attention mechanism.

Here the denoising network of the latent-space network is enhanced through the cross-attention mechanism, that is, a conditional denoising autoencoder ${ϵ}_{θ} \left({z}_{T}, t, {v}^{⇀}\right) ; t = 1 , … , T$ is implemented. An objective of the conditional denoising autoencoder ${ϵ}_{θ} \left({z}_{T}, t, {v}^{⇀}\right)$ is to optimize the embedding vector ${v}^{⇀}$ to learn the semantic features that reflect a real defect in the reference defective-product image when that the parameters of the model are frozen.

In all embodiments of the present disclosure, the denoising network of the latent-space network may comprise T U-Nets configured for performing the T denoising operations (e.g., the T steps in the denoise process), respectively. The embedding variable ${v}^{⇀}$ serves as a reference for adjusting an intermediate layer of the j^{th} (j being a positive integer less than or equal to T) U-Net through a cross-attention layer. For example, a j^{th} key vector K is determined according to the embedding vector ${v}^{⇀}$ and a first parameter W_{K}^{j} of the j^{th} U-Net, a j^{th} value vector V is determined according to the embedding vector ${v}^{⇀}$ and a second parameter W_{V}^{j} of the j^{th} U-Net, and an attention of the j^{th} U-Net (e.g., an attention-weighted feature map of the intermediate layer) is calculated according to the j^{th} key vector K and the j^{th} value vector V.

In all embodiments of the present disclosure, the attention of the j^{th} U-Netis calculated using equation (1). $Attention \left(Q, K, V\right) = softmax \left(\frac{{QK}^{T}}{\sqrt{d}}\right) ⋅ V$ (1) $Q = {W}_{Q}^{j} ⋅ {φ}_{j} \left(ε\left({I}^{T}\right)\right) , K = {W}_{K}^{j} ⋅ {v}^{⇀}$, and $V = {W}_{V}^{j} ⋅ {v}^{⇀} . {v}^{⇀}$ represents the initial embedding vector, ε() represents the autoencoder of the pixel-space network, I^{T} represents the reference defective-product image, φⱼ(ε(I^{T})) is a feature map of the intermediate layer of the j^{th} U-Net, d represents a dimension of K and Q, and W_{Q}^{j} , W_{K}^{j} , and W_{V}^{j} are parameter matrices of the j^{th} U-Net.

Here W_{Q}^{j} , W_{K}^{j} , and W_{V}^{j} are matrices related to the model parameters, and W_{Q}^{j} , W_{K}^{j} , and W_{V}^{j} are unchanged in the process of optimizing the embedding vector, thereby facilitating obtaining the embedding vector that can reflect a real defect using a small quantity of reference defective-product images. Referring to FIG. 5, the denoising network may include T U-Nets for the T denoising operations, and the above conditioning is performed on each U-Net.

As an example, the noisy feature of the reference defect-product feature is denoised through the denoising network conditioned by the embedding vector to obtain the predicted noise.

Referring to FIG. 5, as an example, the noisy feature z_{T} of the reference defect-product feature is denoised through the denoising network conditioned by the embedding vector to obtain the predicted noise z₀, which may also be denoted as ${ϵ}_{θ} \left(ε\left({I}^{T}\right),t,{v}^{⇀}\right)$.

In S440, the electronic device calculates a value of a first objective function according to the predicted noise.

As an example, the value of the first objective function is determined according to the predicted noise and a Gaussian noise (e.g., a noise sampled from a Gaussian distribution). In all embodiments of the present disclosure, the first objective function ${L}_{LDM} \left({I}^{T}, t, {v}^{⇀}\right)$ may be expressed by equation (2): ${L}_{LDM} \left({I}^{T}, t, {v}^{⇀}\right) = {A}_{{τ}_{ε \left(x\right) , ϵ , t , {v}^{⇀}}} \left[{\left‖\left(ϵ-{ϵ}_{θ}\left(ε\left({I}^{T}\right),t,{v}^{⇀}\right)\right)\right‖}_{2}^{2}\right]$ (2)

ε represents the Gaussian noise, and ${ϵ}_{θ} \left(ε\left({I}^{T}\right),t,{v}^{⇀}\right)$ represents the predicted noise.

In S450, the electronic device adjusts the parameters in the initialized embedding vector through minimizing the first objective function to obtain the updated embedding vector.

As an example, values of the parameters of the embedding vector are updated by minimizing the first objective function. The adjusted embedding vector serves as the updated embedding vector when the first objective function is minimized. In all embodiments of the present disclosure, the updated embedding vector ${v}^{⇀} *$ may be determined through equation (3): ${v}^{⇀} * = \begin{matrix}arg min \\ {v}^{⇀}\end{matrix} {L}_{LDM} \left({I}^{T}, t, {v}^{⇀}\right)$ (3)

In the process P400, because a small quantity of reference defective-product images are required for optimizing the embedding vector, the updated embedding vector ${v}^{⇀} *$ can be obtained based on the small quantity of reference defective-product images. Specifically, according to the embodiment provided in the process P400, it is unnecessary to tune the parameters of the entire image generation model in learning. Instead, the embedding is utilized, and the parameters of the image generation model are frozen, so that only the parameters of the embedding vector are updated in the noise-adding and denoising processes. In this way, the embedding vector after the machine learning captures a feature distribution representing the provided real defect and can be used to guide the image generation in subsequent stages. Further, because the updated embedding vector ${v}^{⇀} *$ represents the semantic features in the reference defective-product image that reflect the real defect, the updated embedding vector is capable to serve as a reference for processing a normal-product image of a good product to obtain a new defective-product image (here the "new defective-product image" can reflect features of a real defective-product image, and therefore is different from the "synthesized defective-product image" that cannot reflect features of a real defective-product image in the related art).

Hereinafter another specific implementation of operation S230 is improved. In other words, the updated embedding vector ${v}^{⇀} *$ may be determined based on either the image generation model 50 as shown in FIG. 5 or the image generation model 60 as shown in FIG. 6. As shown in FIG. 6, in all embodiments of the present disclosure, an input image is directly denoised in a pixel-space network. As an example, the reference defective-product image I^{T} (which may be denoted as z) is inputted into the image generation model 60.

Similar to the above embodiments, there may be one or more reference defective-product images. For example, the quantity of the reference defective-product images may range from one to ten. In a case that more than one reference defective-product image is provided, the multiple reference defective-product images input into the image generation model in a batch may have the defects of the same object type. In order to enable the embedding vector to learn the semantic features of the real defect well, reference defective-product images having the same type of defect are inputted into the model. For example, different defective-product images showing the hazelnuts having the cracks due to compression are input into the pre-trained image generation model a batch, so that the embedding vector learns semantic features of the cracks due to compression.

A noisy image z_{T} is obtained by adding noise into the reference defective-product image z through a noise adding network of the image generation model 60. Here the denoising network is still conditioned by the initialized embedding vector through a cross-attention mechanism, that is, a conditional denoising autoencoder ${ϵ}_{θ} \left({z}_{T}, t, {v}^{⇀}\right) ; t = 1 , … , T$ is implemented. An objective of the conditional denoising autoencoder ${ϵ}_{θ} \left({z}_{T}, t, {v}^{⇀}\right)$ is to optimize the embedding vector ${v}^{⇀}$ that learns semantic features that reflect a real defect in the reference defective-product image when the model parameters are frozen. It is further assumed that the denoising network of the latent-space network includes T U-Nets for the T denoising operations, respectively, and the embedding vector ${v}^{⇀}$ is mapped to an intermediate layer of the j^{th} U-Net through a cross-attention layer, and the cross-attention layer is implemented as expressed by equation (4): $Attention \left(Q, K, V\right) = softmax \left(\frac{{QK}^{T}}{\sqrt{d}}\right) ⋅ V$ (4) $Q = \left.{W}_{Q}^{j}⋅{φ}_{j}\left({I}^{T}\right)\right) , K = {W}_{K}^{j} ⋅ {v}^{⇀}$, and $V = {W}_{V}^{j} ⋅ {v}^{⇀}$. ${v}^{⇀}$ represents the initial embedding vector, ε() represents the autoencoder of the pixel-space network, I^{T} represents the reference defective-product image, φⱼ(I^{T}) is a feature map of the intermediate layer of the j^{th} U-Net, d represents a dimension of K and Q, and W_{Q}^{j} , W_{K}^{j} , and W_{V}^{j} are parameter matrices of the j^{th} U-Net.

Here W_{Q}^{j} , W_{K}^{j} , and W_{V}^{j} are matrices related to the model parameters, and W_{Q}^{j} , W_{K}^{j} , and W_{V}^{j} are unchanged in the process of optimizing the embedding vector, thereby facilitating obtaining the embedding vector that can reflect a real defect using a small quantity of reference defective-product images. Referring to FIG. 6, the denoising network may include T U-Nets for the T denoising operations, and the above conditioning is performed on each U-Net.

Referring to FIG. 6, as an example, the noisy feature z_{T} of the reference defect-product feature is denoised through the denoising network conditioned by the embedding vector to obtain the predicted noise z₀, which may also be denoted as ${ϵ}_{θ} \left({I}^{T}, t, {v}^{⇀}\right)$. A value of a third objective function is determined based on the predicted noise, and the updated embedding vector is determined according to the value of the third objective function.

For example, the third objective function ${L}_{LDM} \left({I}^{T}, t, {v}^{⇀}\right)$ may be expressed by equation (5): ${L}_{LDM} \left({I}^{T}, t, {v}^{⇀}\right) = {A}_{{τ}_{ε \left(x\right) , ϵ , t , {v}^{⇀}}} \left[{\left‖\left(ϵ-{ϵ}_{θ}\left({I}^{T}, t, {v}^{⇀}\right)\right)\right‖}_{2}^{2}\right]$ (5)

ε represents the noise sampled from the Gaussian distribution, and ${ϵ}_{θ} \left({I}^{T}, t, {v}^{⇀}\right)$ represents the predicted noise.

The updated embedding vector ${v}^{⇀} *$ is determined according to the following formula (6): ${v}^{⇀} * = \begin{matrix}arg min \\ {v}^{⇀}\end{matrix} {L}_{LDM} \left({I}^{T}, t, {v}^{⇀}\right)$ (6)

In all embodiments of the present disclosure, the updated embedding vector ${v}^{⇀} *$ may be determined in a manner as shown in FIG. 5 or FIG. 6. An anomaly region (also called a defect region) in the reference defective-product image is usually a small part of the entire object. Optimizing the embedding vector using the entire reference defective-product image may result in the fact that the updated embedding vector learns a feature distribution too biased to the features of the object rather than the features of the anomaly region. For example, a hole in a carpet, where the anomaly region of the hole is very small in view of the entire image of the object, i.e., carpet. Optimizing the embedding vector in the defective-product image of the carpet may result in the fact that the updated embedding vector learns a feature distribution of the entire carpet rather than focuses on a feature distribution of a local region having the hole. In order to determine the new defective-product image and focus on semantic features of the anomaly region, in all embodiments of the present disclosure, the initial embedding vector ${v}^{⇀}$ may be optimized with reference to a segmentation mask M^{T} of the reference defective-product image I^{T}, as another implementation of operation S230.

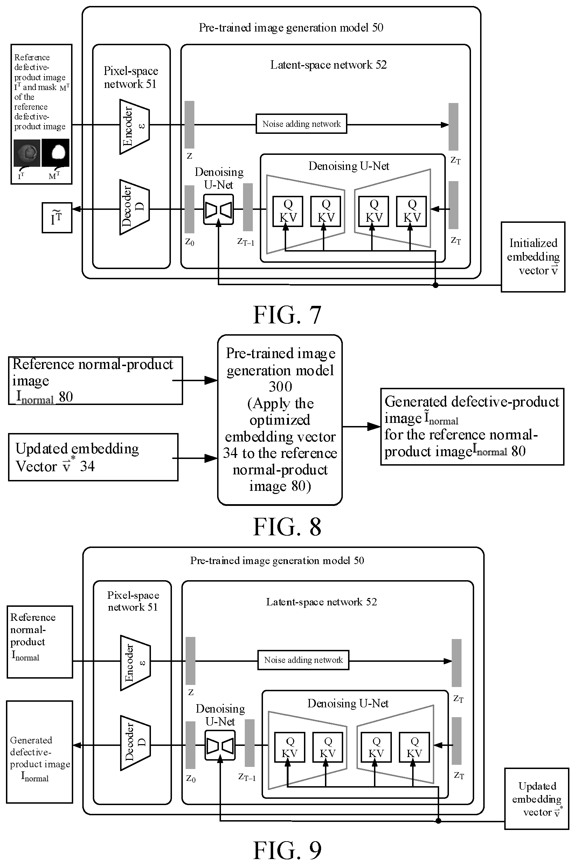

Referring to FIG. 7, an image generation model may be consistent with the image generation model used in FIG. 5. In all embodiments of the present disclosure, the reference defective-product image I^{T} and the mask M^{T} for the reference defective-product image are input into the model of the pixel-space network 51. As an example, FIG. 7 shows a reference defective-product image and a mask of the reference defective-product image. Alternatively, multiple reference defective-product images and their respective masks may be input into the model. For example, a boundary of an exposed portion of an i^{th} mask Mᵢ^{T} indicates an anomaly region in an i^{th} reference defective-product image Iᵢ^{T}. Referring to FIG. 7, as an example, for a reference defective-product image I^{T} of a hazelnut, a boundary of its mask M^{T} indicates an edge of a cracked region on the hazelnut, and the model outputs a reconstructed image ${{I}^{T}}^{˜}$ of the reference defective-product image.

In all embodiments of the present disclosure, after the reference defective-product image and the mask of the reference defective-product image are inputted into the pre-trained image generation model. Under a premise that parameters of the image generation model are unchanged, a value of a second objective function is determined based on features of the reference defective-product image exposed by the corresponding mask. As an example, a difference between the Gaussian noise and predicted noise is determined. Then, the value of the second objective function is determined based on the difference and the feature of the part of the reference defective-product image exposed by the mask. In all embodiments of the present disclosure, the second objective function ${L}_{LDM}^{′} \left({I}^{T}, t, {v}^{⇀}\right)$ of the model may be expressed by equation (7). ${L}_{LDM}^{′} \left({I}^{T}, t, {v}^{⇀}\right) = {A}_{{τ}_{ε \left(x\right) , ϵ , t , {v}^{⇀}}} \left[{\left‖\left(ϵ-{ϵ}_{θ}\left(ε\left({I}^{T}\right), t, {v}^{⇀}\right)\right)⊙{M}^{T}\right‖}_{2}^{2}\right]$ (7)

ε represents the Gaussian noise, ${ϵ}_{θ} \left(ε\left({I}^{T}\right),t,{v}^{⇀}\right)$ represents the predicted noise, I^{T} represents the reference defective-product image, and M^{T} represents the mask of the reference defective-product image I^{T}.

Further, the updated embedding vector ${v}^{⇀} *$ is determined according to the value of the second objective function, for example, as shown in the following equation (8): ${v}^{⇀} * = \begin{matrix}arg min \\ {v}^{⇀}\end{matrix} {L}_{LDM}^{′} \left({I}^{T}, t, {v}^{⇀}\right)$ (8)

When determining the updated embedding vector in a manner as shown in FIG. 7, the mask of the reference defective-product image is introduced as a guide for focusing on local details of the object. In other words, by guiding the machine learning to focus on the anomaly region, it is ensured that the image generation exhibits controllability not only semantics but also spatial scales. Specifically, at a semantic level, the reference defective-product image is used to generate images consistent with real defective products, where consistency in an object, texture (for example, a bottle) and a defect type (for example, a crack) is ensured. At a spatial level, a position, size, and a quantity of the anomaly regions can be precisely controlled by providing a mask. Based on the semantic controllability and the spatial controllability, the updated embedding vector can be guided to precisely reflect semantic features of the real defect(s) in machine learning, thereby facilitating generation of a high-quality defective-product image in the subsequent step.

The manner of determining the embedding vector based on the reference defective-product image and the mask of the reference defective-product image may be applied to both the image generation model as shown in FIG. 5 and the image generation model as shown in FIG. 6. Details are not described herein again.

Referring to FIG. 2, in S240, the electronic device obtains a reference normal-product image indicating a second object with a second anomaly degree , the second object and the first object are of the same object type, and the second anomaly degree is lower than the first anomaly degree.

The reference normal-product image, the second predicted object, and the second anomaly degree have been described in detail when illustrating operation S210 in the above embodiments. Details are not described herein again.

Still referring to FIG. 2, after the updated embedding vector is obtained and the reference normal-product image is obtained, S250 is performed. The electronic device inputs the reference normal-product image and the updated embedding vector into the image generation model, and the reference normal-product image are processed using the updated embedding vector to obtain a new defective-product image.

Here, because the updated embedding vector ${v}^{⇀} *$ learns the semantic features of the real defect, the denoising network of the model through cross-attention can be conditioned by the updated embedding vector ${v}^{⇀} *$, such that the semantic features of the real defect carried in ${v}^{⇀} *$ is applied to the reference normal-product image, that is, an anomaly region is generated on a basis the reference normal-product image, and a new defective-product image is thus generated. As an example, referring to FIG. 8, a reference normal-product image 80 and the updated embedding vector 34 are inputted into the pre-trained image generation model 300, and an output of the model is the new defective-product image.

Referring to FIG. 9, in all embodiments of the present disclosure, in S250-1, the electronic device may into the reference normal-product image Iₙₒᵣₘₐₗ (that is, an image having no anomaly region) into the encoder ε of the pixel-space network of the image generation model 50, so that the inputted image Iₙₒᵣₘₐₗ can be compressed (i.e., encoded) through the encoder ε. After the image is encoded by the encoder ε, the target feature z in the latent-space network 52 are obtained, which may also be denoted as ε(Iₙₒᵣₘₐₗ). Then, a diffusion operation is performed on the target features z in the latent representation space, and then image reconstruction Ĩₙₒᵣₘₐₗ is performed through the decoder D to restore the image to the pixel-space network. The reference normal-product image Iₙₒᵣₘₐₗ is transferred to the latent-space network 52 for noise addition and denoising, so that only important and basic features can be retained and imperceptible high-frequency information in the image can be neglected, thereby greatly reducing computational complexity in training and sampling stages.

Referring to FIG. 9, in all embodiments of the present disclosure, in S250-2, the electronic device may process the target feature z through the noise adding network of the latent-space network 52 to obtain noisy feature z_{T} of the target feature. In S250-3, the electronic device conditions the denoising network of the model 50 using the updated embedding vector ${v}^{⇀} *$ through a cross-attention mechanism. For generating the defective-product image, the updated embedding vector ${v}^{⇀} *$ is frozen, and it is injected into the image (feature) as a condition through a cross-attention module to generate a desired defect. The denoising network of the latent-space network may be enhanced through a cross-attention mechanism, that is, a conditional denoising autoencoder ${ϵ}_{θ} \left({z}_{T}, t, {v}^{⇀}\right) ; t = 1 , … , T$ is implemented. An objective of the conditional denoising autoencoder ${ϵ}_{θ} \left({z}_{T},t,{v}^{⇀}*\right)$ is to predict a denoised feature or predict a noise according to the input z_{T}, and the prediction is conditioned by the updated embedding vector ${v}^{⇀} *$, where z_{T} is a noisy version of the input ε(Iₙₒᵣₘₐₗ), so that the new defective-product image Ĩₙₒᵣₘₐₗ outputted by the model 50 includes semantic features that reflect a real defect.

When the denoising network of the model 50 comprises a U-Net, the updated embedding vector ${v}^{⇀} *$ is injected into an intermediate layer of each U-Net (using an h^{th} U-Net as an example, h being a positive integer less than or equal to T) through a cross-attention layer, where the cross-attention layer may be expressed by the following equation (9): $Attention \left(Q, K, V\right) = softmax \left(\frac{{QK}^{T}}{\sqrt{d}}\right) ⋅ V$ (9) $Q = {W}_{Q}^{h} ⋅ {φ}_{h} \left(ε\left({I}_{normal}\right)\right) , K = {W}_{K}^{h} ⋅ {v}^{⇀} *$, and $V = {W}_{V}^{h} ⋅ {{v}^{⇀}}^{*}$. ${v}^{⇀} *$ represents the updated embedding vector, ε() represents an autoencoder of the pixel-space network, Iₙₒᵣₘₐₗ represents the reference normal-product image, φₕ(ε(Iₙₒᵣₘₐₗ)) is a feature map of the intermediate layer of the h^{th} U-Net, d represents a dimension of K and Q, and ${W}_{Q}^{h} , {W}_{K}^{h}$, and ${W}_{V}^{h}$ are parameter matrices of the h^{th} U-Net. The denoising network may include T U-Nets for the T denoising operations, respectively, and each U-Net is condition in the above manner.

In all embodiments of the present disclosure, in S250-4, the electronic device may denoise the noisy feature z_{T} of the target feature through the denoising network, which is conditioned by the updated embedding vector ${v}^{⇀} *$, to obtain the predicted noise z₀, which may also be denoted as ${ϵ}_{θ} \left(ε\left({I}_{normal}\right),t,{v}^{⇀}*\right)$.

Here W_{Q}^{j} , W_{K}^{j} , and W_{V}^{j} are matrices related to the model parameters. All parameters (including ${W}_{Q}^{j} , {W}_{K}^{j}$, and ${W}_{V}^{j}$) of the model and the updated embedding vector ${v}^{⇀} *$ may be unchanged in the process of generating the new defective-product image. In this case, because ${v}^{⇀} *$ carries semantic features of the real defect, conditioning the denoising network by the updated embedding vector ${v}^{⇀} *$ enables the semantic features of the real defect to be applied to or transferred to the noisy feature z_{T} of the target feature, such that the predicted noise z₀ also reflects the semantic features of the real defect. As a result, generation of the new defective-product image from the reference normal-product image Iₙₒᵣₘₐₗ is guided.

In S250-5, the electronic device performs image reconstruction based on the noise z₀ through the encoder D predicted by the denoising network, to obtain the new defective-product image Ĩₙₒᵣₘₐₗ.

Herein because the updated embedding vector ${v}^{⇀} *$ learns the distribution of the real defects provided by the reference defective-product image, the updated embedding vector ${v}^{⇀} *$ is injected into the denoising network through the cross-attention mechanism and is applied to a normal-product image of a good product to guide generation of a defective-product image in an image generation stage. In this way, the new defective-product image that can be obtained includes semantic features of the real defect.

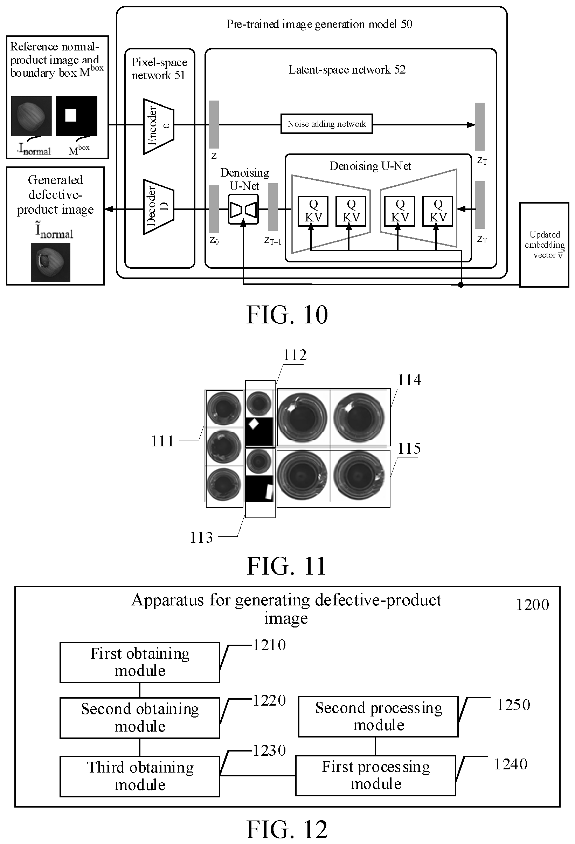

In all embodiments of the present disclosure, in order to adjust the position, size, and/or the quantity of the anomaly regions in the new defective-product image, a bounding box may be introduced. The bounding box and the reference normal-product image are input into the pre-trained image generation model. As an example, referring to FIG. 10, an image generation model is consistent with the image generation model used in FIG. 5. As an example, the content of the pixel-space network 51 that is inputted into the model includes the reference normal-product image Iₙₒᵣₘₐₗ and a bounding box M^{box} for the reference normal-product image. A position of the bounding box M^{box} may be any position in the reference normal-product image Iₙₒᵣₘₐₗ. In the new defective-product image Ĩₙₒᵣₘₐₗ, the position of the bounding box M^{box} is collocated with an anomaly region. For example, referring to FIG. 10, for the reference normal-product image Iₙₒᵣₘₐₗ of the hazelnut, a region having the defect of the hazelnut in the new defective-product image is inside a region indicated by the bounding box M^{box} that is inputted into the model along with the reference normal-product image.

In all embodiments of the present disclosure, for inference images (as shown in FIG. 10, z_{T-1}, ..., z₀) at each step in the denoising process, a region inside the bounding box M^{box} is retained, and a region outside the bounding box M^{box} is replaced with a noisy version of the reference normal-product image Iₙₒᵣₘₐₗ. In this way, the generated anomaly region can be controlled to be located in a designated region of the reference normal-product image, and other regions remain unaffected as much as possible.

In all embodiments of the present disclosure, the reference normal-product image is inputted into the image generation model, and the T-step noise addition is performed on the reference normal-product image through the noise adding network of the image generation model, so as to obtain the noisy features of the reference normal-product image. The noisy features comprise a noisy feature for the t^{th} step, T being a positive integer, and t+1 being a positive integer not greater than T. Correspondingly, through the denoising network conditioned by the updated embedding vector, the T-step denoising is performed on the noisy features of the reference normal-product image. The generated anomaly feature zₜ obtained in the T-step denoising may be determined according to the following equation (10): ${z}_{t} = {z}_{normal}^{t} ⊙ \left(1-{M}^{box}\right) + {z}_{t}^{′} ⊙ {M}^{box}$ (10) ${z}_{normal}^{t}$ represents noisy feature of ε(Iₙₒᵣₘₐₗ) for obtained at the t^{th} step of the noise adding process, zₜ^{'} represents a feature obtained by denoising zₜ₊₁, and M^{box} represents the bounding box for the reference normal-product image. The generated anomaly features zₜ obtained through the T-step denoising thus comprises: a first part, which is a part located outside of the boundary box in the output of the t^{th} noise-adding iteration, that is, ${z}_{normal}^{t} ⊙ \left(1-{M}^{box}\right)$; and a second part, which is a part of a result (i.e. the resultant image ${z}_{t}^{′}$) of denoising the result (i.e., the resultant image zₜ₊₁) of the denoising iteration corresponding to the (t+1)^{th} noise-adding iteration, that is, ${z}_{t}^{′} ⊙ {M}^{box}$. Generally, the (T-t)^{th} iteration in the denoising process corresponds to the t^{th} iteration in the noise adding process.

Referring to FIG. 10, the generated anomaly features z₀ may be decoded through the decoder D of the pixel-space network 51 to obtain the new defective-product image Ĩₙₒᵣₘₐₗ for the reference normal-product image Iₙₒᵣₘₐₗ.

Herein an image (that is, the new defective-product image) is generated from random noise based on the image generation model such as a diffusion model. Therefore, the obtained new defective-product image has semantic diversity. Further, to further enhance diversity, the bounding box(es) may be introduced to the defective-product image generation process of the present disclosure, to adjust the position, the size, and/or the quantity of the anomaly regions, thereby improving diversity of the new defective-product image.

Embodiments of the present disclosure further provide a method for generating a sample for training a detection model. The method for generating a sample for training a detection model may be performed by a server, such as the server 104 as shown in FIG. 1, may be performed by the terminal 102 as shown in FIG. 1, or may be performed by an electronic device storing a related algorithm, such as an electronic device 1500 as shown in FIG. 15. Hereinafter it is taken as an example that the method is performed by an electronic device.

The method includes the following operations. S1: The electronic device determines a positive sample image, the positive sample image being the reference normal-product image of the second object. The positive sample image is the image of the normal product (the non-defective product), which has a low anomaly degree and may thus be considered as including no anomaly region. S2: The electronic device determines a negative sample image, which is the new defective-product image of the first object, through the method for generating the defective-product image according to the foregoing embodiments. Here the first object has a first anomaly degree, and the second object has a second anomaly degree lower than the first anomaly degree.

As described above, negative samples of defective products are difficult to obtain on a large scale. Moreover, in the related art, there is a significant distribution gap between defective-product images obtained through synthesis and real defective-product images or features, which is not beneficial to training anomaly detection models in practical applications. In the sample generation solution provided herein, an image feature distribution about an anomaly region in a reference defective-product image is learned through an embedding vector, and the new defective-product image is obtained based on embedding features. Therefore, it addressed the issue that negative samples of defective products are difficult to obtain on a large scale. In addition, in comparison with the synthesized defective-product image, a semantic gap between the new defective-product image and the real defective-product image (the reference defective-product image) can be reduced, thereby facilitating improving detection performance of the detection model, and making the trained model more robust.

The foregoing provides an overall description of the method for generating a defective-product image and the method for generating a sample for training a detection model according to the embodiments of the present disclosure. The following further describes the method for generating a defective-product image in specific implementation.

FIG. 11 is a schematic diagram of generating negative samples for a detection model based on a small quantity of reference defective-product images according to an embodiment of the present disclosure.

Because negative samples of defective products are difficult to obtain on a large scale, here the negative samples including the image feature distributions about the anomaly regions in the reference defective-product images can be generated based on the small quantity of reference defective-product images. Referring to FIG. 11, the foregoing objective is achieved by using only three reference defective-product images 111. On a basis of operation S210 in FIG. 2, the embedding vector representing the image feature distribution of the anomaly region(s) in the reference defective-product images may be optimized by using the three reference defective-product images 111.

Further, using a pair 112 of a randomly obtained image of a normal product and a bounding box, a new defective-product image 114 can be obtained on a basis of operation S220 in FIG. 2. Using a pair 113 of a randomly obtained image of normal product and a bounding box 113, a new defective-product image 115 can be obtained on a basis of operation S220 in FIG. 2. The image of the normal product in the pair 112 may serve as a positive sample of the detection model, and the new defective-product image 114 obtained through the operation S220 in FIG. 2 may serve as a negative sample of the detection model.

Here a small quantity of reference defective-product images can drive generations of more realistic and diverse defective-product images. Specifically, a feature distribution of the defect is learned based on embedding vectors of some given real defective products. Further, a generative model is conditioned using an updated embedding vector and a given bounding box to generate realistic and diverse defects on a specific object, thereby addressing the issue that anomaly samples are difficult to obtain at a large scale. In addition, in comparison with the synthesized defective-product image in the solution provided in the related art, the solution provided herein can generate new defective-product images that reflect semantic features of the real defect, so that an intelligent detection algorithm trained by using the new defective-product images obtained herein as negative samples can achieve higher detection performance.

Embodiments of the present disclosure further provide a detection method. The method includes detecting a to-be-tested object through a detection model to obtain a detection result, the detection result comprises whether the to-be-tested object is a first object or a second object, and the detection result further comprises a position of a product defect when the to-be-tested object is the first object. The detection model is trained through the method for generating a sample for training a detection model in the foregoing embodiments. Because the method for generating a sample for training a detection model can provide abundant negative samples and positive samples, and the negative samples are new defective-product images including features of real defects. In comparison with the synthesized defective-product image in the solution provided in the related art, an intelligent detection algorithm trained by using the new defective-product images generated herein as negative samples can achieve higher detection performance.

The method embodiments of the present disclosure are described in detail above with reference to FIG. 1 to FIG. 11, and apparatus embodiments of the present disclosure are described in detail below with reference to FIG. 12 to FIG. 14.

FIG. 12 is a schematic structural diagram of an apparatus 1200 for generating a defective-product image according to an embodiment of the present disclosure. The apparatus 1200 for generating a defective-product image may be configured in a server, such as the server 104 in FIG. 1, may be configured in the terminal 102 as shown in FIG. 1, or may be configured in an electronic device storing a related algorithm, such as an electronic device 1500 as shown in FIG. 15. This is not limited herein.

Referring to FIG. 12, the apparatus for generating a defective-product image 1200 includes: a first obtaining module 1210, a second obtaining module 1220, a third obtaining module 1230, a first processing module 1240, and a second processing module 1250. The first obtaining module 1210 is configured for obtaining a reference defective-product image indicating a first object with a first anomaly degree. The second obtaining module 1220 is configured for initializing an embedding vector configured for representing a product defect, where the embedding vector in a multidimensional vector. The third obtaining module 1230 is configured for obtaining a reference normal-product image indicating a second object with a second anomaly degree, the second object and the first object are of a same object type, and the second anomaly degree is lower than the first anomaly degree. The first processing module 1240 is configured for updating the initialized embedding vector through an image generation model according to the reference defective-product image to obtain an updated embedding vector. The second processing module 1250 is configured for processing the reference normal-product image through the image generation model using the updated embedding vector to obtain a new defective-product image.

In all embodiments of the present disclosure, the first processing module 1240 may be configured for: optimizing the initial embedding vector through the image generation model according to the reference defective-product image, where parameters of the image generation model remain unchanged during optimization of the initial embedding vector.

In all embodiments of the present disclosure, the image generation model comprises a pixel-space network and a latent-space network.

The first processing module 1240 comprises: a first input unit, a denoising unit, a first determining unit, and a second determining unit.

The first input unit is configured for: converting the reference defective-product image into a reference defect-product feature through an encoder in the pixel-space network and adding noise into the reference defect-product feature through a noise adding network in the latent-space network to obtain a noisy feature. The denoising unit is configured for predicting the noise in the noisy feature through a denoising network in the latent-space network to obtain a predicted noise, where the denoising network is conditioned on the initialized embedding vector through cross-attention. The first determining unit is configured for calculating a value of a first objective function using the predicted noise. The second determining unit is configured for updating parameters in the initialized embedding vector according to the value of the first objective function to obtain the updated embedding vector.

In all embodiments of the present disclosure, the denoising network may comprise T U-Nets for T denoising operations, respectively, T is a positive integer. The second obtaining module further comprises a mapping unit configured for: determining a j^{th} key vector according to the initial embedding vector and a first parameter of a j^{th} U-Net among the T U-Nets, where j is a positive integer less than or equal to T; determining a j^{th} value vector according to the initial embedding vector and a second parameter of the j^{th} U-Net; and calculating an attention of the j^{th} U-Net according to the j^{th} key vector and the j^{th} value vector.

In all embodiments of the present disclosure, the first determining unit may be configured for calculating the value of the first objective function according to predicted noise and a Gaussian noise. The second determining unit is configured for: adjusting the parameters in the initialized embedding vector through minimizing the first objective function, where the adjusted embedding vector serves as the updated embedding vector when the first objective function is minimized.

In all embodiments of the present disclosure, the first processing module 1240 may comprise a second input unit, a third determining unit, and a fourth determining unit. The second input unit is configured for inputting the reference defective-product image and an image mask into an image generation model. The third determining unit is configured for calculating a value of a second objective function according to a feature extracted from a part of the reference defective-product image exposed by the image mask, where the parameters of the image generation model remain unchanged during calculation of the value of the second objective function. The fourth determining unit is configured for: updating parameters of the initial embedding vector according to the value of the second objective function to obtain the updated embedding vector. A product defect in the reference defective-product image is located in the part exposed by the image mask.

In all embodiments of the present disclosure, the third determining unit may be configured for: determining a difference between a Gaussian noise and a noise predicted by a denoising network in the image generation model; and determining the value of the second objective function according to the difference and the extracted feature. The fourth determining unit is configured for adjusting the parameters in the initialized embedding vector through minimizing the second objective function, where the adjusted initialized embedding vector serves as the updated embedding vector when the second objective function is minimized.

In all embodiments of the present disclosure, the second processing module 1250 may be configured for processing the reference normal-product image through the image generation model using the updated embedding vector and a bounding box to obtain the new defective-product image, where the parameters of the image generation model remain unchanged during processing of the reference normal-product image, and the bounding box is configured for indicating a region, in which a product defect is located, in the new defective-product image.

In all embodiments of the present disclosure, the second processing module 1250 may comprise a first generation unit and a second generation unit. The first generation unit is configured for: inputting the reference normal-product image into the image generation model; adding noise to the reference normal-product image successively for T noise-adding iterations through a noise adding network in the image generation model to obtain a noisy feature of the reference normal-product image, where T is a positive integer, and for each t being a positive integer smaller than or equal to T-1, an output of a t^{th} noise-adding iteration is an input of a (t+1)^{th} noise-adding iteration among the T noise-adding iterations; and denoising the noisy feature successively for T denoising iterations corresponding to the T noise-adding iterations, respectively, through a denoising network guided by the updated embedding vector to obtain a denoised feature, where a result of the denoising iteration corresponding to the t^{th} noise-adding iteration comprises a first part and a second part, the first part is a part located outside of the boundary box in the output of the t^{th} noise-adding iteration, and the second part is a part of a result of denoising the result of the denoising iteration corresponding to the (t+1)^{th} noise-adding iteration. The second generation unit is configured for decoding the denoised feature through a decoder of a pixel-space network in the image generation model to obtain the new defective-product image.

Herein the initial embedding vector is updated through the image generation model according to the reference defective-product image to obtain the updated embedding vector. The first object in the reference defective-product image has the first anomaly degree, and the embedding vector is the numerical vector configured for representing the product defect in the image. The reference normal-product image is then processed through the image generation model according to the updated embedding vector, such that the updated embedding vector to the reference normal-product image is applied to obtain the new defective-product image. The reference normal-product image shows the second object, the second object and the first object belong to the same object type, and the second object has the second anomaly degree lower than the first anomaly degree. Because the updated embedding vector can reflect characteristics of the real defective-product image(s) for objects of this type, the new defective-product image obtained through applying the updated embedding vector to the reference normal-product image carries the characteristics of the real defective-product images. Further, the new defective-product image can be used as a negative sample for training a detection model, thereby facilitating improving detection performance of the detection model.

The apparatus for generating a defective-product image embodiments may correspond to the embodiments of the method for generating a defective-product image. For similar descriptions, refer to the method embodiments. To avoid repetition, details are not described herein again. Specifically, the apparatus for generating a defective-product image shown in FIG. 12 may execute the foregoing embodiments of the method for generating a defective-product image, and the foregoing and other operations and/or functions of the modules in the apparatus are separately configured to implement the embodiments of the method for generating a defective-product image. For brevity, details are not described herein again.

FIG. 13 is a schematic structural diagram of an apparatus 1300 for generating a sample for training a detection model for a detection model according to an embodiment of the present disclosure. The apparatus 1300 may be configured in a server, such as the server 104 in FIG. 1, may be configured in the terminal 102 as shown in FIG. 1, or may be configured in an electronic device storing a related algorithm, such as an electronic device 1500 as shown in FIG. 15. This is not limited herein.

Referring to FIG. 13, the apparatus 1300 for generating a sample for training a detection model for a detection model includes: a first determining module 1310 and a second determining module 1320. The first determining module 1310 is configured for determining a positive sample image. The second generation module 1320 is configured for determining a negative sample image through any above method for generating the defective-product image. The positive sample image is the reference normal-product image of the second object, and the negative sample image is the new defective-product image of the first object. The first object and the second object are of the same object type, and the anomaly degree of the second object is lower than the anomaly degree of the first object.

Negative samples of defective products are difficult to obtain on a large scale. Moreover, in the related art, there is a significant distribution gap between defective-product images obtained through synthesis and real defective-product images or features, which is not beneficial to training anomaly detection models in practical applications. In the sample generation solution provided herein an image feature distribution about an anomaly region in a reference defective-product image is learned through an embedding vector, and the new defective-product image is obtained based on embedding features. Therefore, it can address the issue that negative samples of defective products are difficult to obtain on a large scale. In addition, in comparison with the synthesized defective-product image, a semantic gap between the new defective-product image and the real defective-product image (the reference defective-product image) can be reduced, thereby facilitating improving detection performance of the detection model, and making the trained model more robust.

The embodiments of the apparatus for generating a sample for training a detection model may correspond to the embodiments of the method for generating a sample for training a detection model. For similar descriptions, refer to the method embodiments. To avoid repetition, details are not described herein again. Specifically, the apparatus for generating a sample for training a detection model shown in FIG. 13 may execute the embodiments of the method for generating a sample for training a detection model. In addition, the foregoing and other operations and/or functions of the modules in the apparatus are separately configured to implement the embodiments of the method for generating a sample for training a detection model. For brevity, details are not described herein again.

FIG. 14 is a schematic structural diagram of a detection apparatus 1400 according to an embodiment of the present disclosure. The apparatus 1400 may be configured in a server, such as the server 104 in FIG. 1, may be configured in the terminal 102 as shown in FIG. 1, or may be configured in an electronic device storing a related algorithm, such as an electronic device 1500 as shown in FIG. 15. This is not limited herein.

Referring to FIG. 14, the detection apparatus 1400 includes: a detection module 1410. The detection module 1410 is configured for detecting a to-be-tested object through a detection model to obtain a detection result, where the detection model is trained through the above method for generating a sample for training a detection model. The detection result comprises whether the to-be-tested object is a first object or a second object, and the detection result further comprises a position of a product defect when the to-be-tested object is the first object. The first object and the second object are of the same object type, and the anomaly degree of the second object is lower than the anomaly degree of the first object.

The detection apparatus embodiments may correspond to the detection method embodiments. For similar descriptions, refer to the method embodiments. To avoid repetition, details are not described herein again. Specifically, the detection apparatus shown in FIG. 14 may execute the detection method embodiments, and the foregoing and other operations and/or functions of the modules in the apparatus are separately configured to implement the detection method embodiments. For brevity, details are not described herein again.

The detection apparatus according to this embodiment of the present disclosure is described above with reference to the accompanying drawings from the perspective of functional modules. The functional module may be implemented in a form of hardware, or may be implemented in a form of software, or may be implemented in a combination of hardware and software modules. Specifically, the operations of the method embodiments in the embodiments of the present disclosure may be completed by an integrated logic circuit of hardware in a processor and/or instructions in a software form. The operations of the method disclosed in the embodiments of the present disclosure may be directly embodied by being completed by a hardware decoding processor or may be completed by using a combination of hardware and software modules in the decoding processor. In some embodiments, the software module may be located in a storage medium that is mature in the art, such as a random-access memory, a flash memory, a read-only memory, a programmable read-only memory, an electrically erasable programmable memory, or a register. The storage medium is located in a memory. The processor reads information in the memory and completes the operations in the foregoing method embodiments in combination with the hardware of the processor.

FIG. 15 is a schematic block diagram of an electronic device 1500 according to an embodiment of the present disclosure. The electronic device 1500 in FIG. 15 may be configured to perform the foregoing method for generating a defective-product image or perform the foregoing method for generating a sample for training a detection model or perform the foregoing detection method. As shown in FIG. 15, the electronic device 1500 may include:
a memory 1510 and a processor 1520. The memory 1510 is configured to store a computer program 1530 and transmit the computer program 1530 to the processor 1520. In other words, the processor 1520 may invoke and execute the computer program 1530 from the memory 1510, to implement the method according to the embodiments of the present disclosure.

For example, the processor 1520 may be configured to perform the operations in the foregoing method according to instructions in the computer program 1530.

In some embodiments of the present disclosure, the processor 1520 may include, but is not limited to:
a general-purpose processor, a digital signal processor (DSP), an application specific integrated circuit (ASIC), a field programmable gate array (FPGA) or another programmable logic device, a discrete gate or transistor logic device, a discrete hardware component, or the like.

In some embodiments of the present disclosure, the memory 1510 includes, but is not limited to:
a volatile memory and/or a non-volatile memory. The non-volatile memory may be a read-only memory (ROM), a programmable read-only memory (PROM), an erasable programmable read-only memory (EPROM), an electrically erasable programmable read-only memory (EEPROM) or a flash memory. The volatile memory may be a random-access memory (RAM) serving as an external cache. Through exemplary but not limited description, many forms of RAMs may be used, for example, a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct Rambus RAM (DR RAM).

In some embodiments of the present disclosure, the computer program 1530 may be segmented into one or more modules. The one or more modules are stored in the memory 1510 and executed by the processor 1520, to perform the forgoing method for generating a defective-product image according to the present disclosure or perform the forgoing method for generating a sample for training a detection model or perform the forgoing detection method. The one or more modules may be a series of computer program instruction sections that can implement specific functions, and the instruction sections are configured to describe an execution process of the computer program 1530 in the electronic device.

As shown in FIG. 15, the electronic device 1500 may further include:
a transceiver 1540, where the transceiver 1540 may be connected to the processor 1520 or the memory 1510.

The processor 1520 may control the transceiver 1540 to communicate with another device, and specifically, may transmit information or data to the other device, or receive information or data transmitted by the other device. The transceiver 1540 may include a transmitter and a receiver. The transceiver 1540 may further include one or more antennas.

The components in the electronic device 1530 are connected through a bus system. In addition to a data bus, the bus system further includes a power bus, a control bus, and a status signal bus.

According to an aspect of the present disclosure, a computer storage medium is provided. The computer storage medium has a computer program stored therein, and when the computer program is executed by a computer, the computer is enabled to perform the method in the foregoing method embodiments. Alternatively, an embodiment of the present disclosure further provides a computer program product including instructions. When the instructions are executed by a computer, the computer is enabled to perform the method in the foregoing method embodiments.

According to another aspect of the present disclosure, a computer program product or a computer program is provided, including computer instructions. The computer instructions are stored in a computer-readable storage medium. A processor of a computer device reads the computer instructions from the computer-readable storage medium, and the processor executes the computer instructions to enable the computer device to perform the method in the foregoing method embodiments.

In other words, when implemented by using software, all or some of the operations may be implemented in a form of a computer program product. The computer program product includes one or more computer instructions. When the computer instructions are loaded and executed on a computer, all or some of the procedures or functions according to the embodiments of the present disclosure are generated. The computer may be a general-purpose computer, a special-purpose computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium that a computer can access or a data storage device such as a server or a data center that includes one or more integrated available media. The available medium may be a magnetic medium (for example, a floppy disk, a hard disk, or a magnetic tape), an optical medium (for example, a digital video disc (DVD)), a semiconductor medium (for example, a solid-state disk (SSD)), or the like.

A person of ordinary skill in the art may be aware that modules, algorithms, and operations in the examples described with reference to the embodiments disclosed in this specification can be implemented by electronic hardware or a combination of computer software and electronic hardware. Whether the functions are executed by hardware or software depends on specific applications and design constraints of the technical solutions. A person skilled in the art may use different methods to implement the described functions for each specific application, but it is not considered that such implementation goes beyond the scope of the present disclosure.

In the embodiments provided in the present disclosure, the disclosed system, apparatus, and method may be implemented in another manner. For example, the apparatus embodiments described above are merely schematic. For example, the module division is merely logical function division and may be another division in actual implementation. For example, a plurality of modules or components may be combined or integrated into another system, or some features may be ignored or not performed. In addition, the displayed or discussed mutual coupling or direct coupling or communication connection may be implemented through some interfaces. The indirect coupling or communication connection between the apparatuses or modules may be implemented in an electrical, mechanical, or other forms.

The modules described as separate components may or may not be physically separated, and the assemblies displayed as modules may or may not be physical modules, i.e., may be located in one place or may be distributed over a plurality of network units. A part of or all of the modules may be selected according to the actual needs to achieve the objectives of the solutions of the embodiments. For example, the functional modules in the embodiments of the present disclosure may be integrated into one processing module, or the functional modules may exist alone physically, or two or more modules may be integrated into one module.

The above descriptions are merely specific implementations of the present disclosure and are not intended to limit the protection scope of the present disclosure. Any variation or replacement readily figured out by a person skilled in the art within the technical scope disclosed in the present disclosure falls within the protection scope of the present disclosure. Therefore, the protection scope of the present disclosure is to be subject to the protection scope of the claims.

## Claims

1. A method for generating a defective-product image, executable by an electronic device, wherein the method comprises:
obtaining a reference defective-product image indicating a first object with a first anomaly degree;
initializing an embedding vector configured for representing a product defect;
obtaining a reference normal-product image indicating a second object with a second anomaly degree, the second object and the first object are of a same object type, and the second anomaly degree is lower than the first anomaly degree;
updating the initialized embedding vector through an image generation model according to the reference defective-product image to obtain an updated embedding vector; and
processing the reference normal-product image through the image generation model using the updated embedding vector to obtain a new defective-product image.

2. The method according to claim 1, wherein updating the initialized embedding vector through the image generation model according to the reference defective-product image to obtain the updated embedding vector comprises:
optimizing the initial embedding vector through the image generation model according to the reference defective-product image, wherein parameters of the image generation model remain unchanged during optimization of the initial embedding vector.

3. The method according to claim 1 or 2, wherein the image generation model comprises a pixel-space network and a latent-space network, and updating the initialized embedding vector through the image generation model according to the reference defective-product image to obtain the updated embedding vector comprises:
converting the reference defective-product image into a reference defect-product feature through an encoder in the pixel-space network,
adding noise into the reference defect-product feature through a noise adding network in the latent-space network to obtain a noisy feature;
predicting the noise in the noisy feature through a denoising network in the latent-space network to obtain a predicted noise, wherein the denoising network is conditioned on the initialized embedding vector through cross-attention;
calculating a value of a first objective function using the predicted noise; and
updating parameters in the initialized embedding vector according to the value of the first objective function to obtain the updated embedding vector.

4. The method according to claim 3, wherein the denoising network comprises T U-Nets for T denoising operations, respectively, T is a positive integer, and the method further comprises:
determining a j^{th} key vector according to the initial embedding vector and a first parameter of a j^{th} U-Net among the T U-Nets, wherein j is a positive integer less than or equal to T;
determining a j^{th} value vector according to the initial embedding vector and a second parameter of the j^{th} U-Net; and
calculating an attention of the j^{th} U-Net according to the j^{th} key vector and the j^{th} value vector.

5. The method according to claim 3 or 4, wherein:
calculating the value of the first objective function using the predicted noise comprises:
calculating the value of the first objective function according to predicted noise and a Gaussian noise; and
updating the parameters in the initialized embedding vector according to the value of the first objective function to obtain the updated embedding vector comprises:
adjusting the parameters in the initialized embedding vector through minimizing the first objective function, wherein the adjusted embedding vector serves as the updated embedding vector when the first objective function is minimized.

6. The method according to claim 1 or 2, wherein updating the initialized embedding vector through the image generation model according to the reference defective-product image to obtain the updated embedding vector comprises:
inputting the reference defective-product image and an image mask into an image generation model;
calculating a value of a second objective function according to a feature extracted from a part of the reference defective-product image exposed by the image mask, wherein the parameters of the image generation model remain unchanged during calculation of the value of the second objective function; and
updating parameters of the initial embedding vector according to the value of the second objective function to obtain the updated embedding vector,
wherein a product defect in the reference defective-product image is located in the part exposed by the image mask.

7. The method according to claim 6, wherein:
calculating the value of the second objective function according to the feature extracted from the part of the reference defective-product image exposed by the image mask comprises:
determining a difference between a Gaussian noise and a noise predicted by a denoising network in the image generation model; and
determining the value of the second objective function according to the difference and the extracted feature; and
updating the parameters of the initial embedding vector according to the value of the second objective function to obtain the updated embedding vector comprises:
adjusting the parameters in the initialized embedding vector through minimizing the second objective function, wherein the adjusted initialized embedding vector serves as the updated embedding vector when the second objective function is minimized.

8. The method according to claim 6 or 7, wherein processing the reference normal-product image through the image generation model using the updated embedding vector to obtain the new defective-product image comprises:
processing the reference normal-product image through the image generation model using the updated embedding vector and a bounding box to obtain the new defective-product image, wherein the parameters of the image generation model remain unchanged during processing of the reference normal-product image, and the bounding box is configured for indicating a region, in which a product defect is located, in the new defective-product image.

9. The method according to claim 6 or 7, wherein processing the reference normal-product image through the image generation model using the updated embedding vector to obtain the new defective-product image comprises:
inputting the reference normal-product image into the image generation model;
adding noise to the reference normal-product image successively for T noise-adding iterations through a noise adding network in the image generation model to obtain a noisy feature of the reference normal-product image, wherein T is a positive integer, and for each t being a positive integer smaller than or equal to T-1, an output of a t^{th} noise-adding iteration is an input of a (t+1)^{th} noise-adding iteration among the T noise-adding iterations;
denoising the noisy feature successively for T denoising iterations corresponding to the T noise-adding iterations, respectively, through a denoising network guided by the updated embedding vector to obtain a denoised feature, wherein:
a result of the denoising iteration corresponding to the t^{th} noise-adding iteration comprises a first part and a second part,
the first part is a part located outside of the boundary box in the output of the t^{th} noise-adding iteration, and
the second part is a part of a result of denoising the result of the denoising iteration corresponding to the (t+1)^{th} noise-adding iteration; and
decoding the denoised feature through a decoder of a pixel-space network in the image generation model to obtain the new defective-product image.

10. A method for generating a sample for training a detection model, executable by an electronic device, wherein the method comprises:
determining a positive sample image; and
determining a negative sample image through the method according to any one of claims 1 to 9;
wherein the positive sample image is the reference normal-product image of the second object, the negative sample image is the new defective-product image of the first object; and
wherein the first object and the second object are of the same object type, and the anomaly degree of the second object is lower than the anomaly degree of the first object.

11. A detection method, executable by an electronic device, wherein the method comprises:
detecting a to-be-tested object through a detection model to obtain a detection result, wherein the detection model is trained through the method according to claim 10;
wherein the detection result comprises whether the to-be-tested object is a first object or a second object, and the detection result further comprises a position of a product defect when the to-be-tested object is the first object; and
wherein the first object and the second object are of the same object type, and the anomaly degree of the second object is lower than the anomaly degree of the first object.

12. An apparatus for generating a defective-product image, arranged in an electronic device, wherein the apparatus comprises:
a first obtaining module, configured for obtaining a reference defective-product image indicating a first object with a first anomaly degree;
a second obtaining module, configured for initializing an embedding vector configured for representing a product defect, wherein the embedding vector in a multidimensional vector;
a third obtaining module, configured for obtaining a reference normal-product image indicating a second object with a second anomaly degree, the second object and the first object are of a same object type, and the second anomaly degree is lower than the first anomaly degree;
a first processing module, configured for updating the initialized embedding vector through an image generation model according to the reference defective-product image to obtain an updated embedding vector; and
a second processing module, configured for processing the reference normal-product image through the image generation model using the updated embedding vector to obtain a new defective-product image.

13. An apparatus for generating a sample for training a detection model, arranged in an electronic device, wherein the apparatus comprises:
a first determining module, configured for determining a positive sample image; and
a second determining module, configured for determining a negative sample image through the method according to any one of claims 1 to 9;
wherein the positive sample image is the reference normal-product image of the second object, the negative sample image is the new defective-product image of the first object; and
wherein the first object and the second object are of the same object type, and the anomaly degree of the second object is lower than the anomaly degree of the first object.

14. A detection apparatus, arranged in an electronic device, the apparatus comprising:
a detecting module, configured for detecting a to-be-tested object through a detection model to obtain a detection result, wherein the detection model is trained through the method according to claim 10;
wherein the detection result comprises whether the to-be-tested object is a first object or a second object, and the detection result further comprises a position of a product defect when the to-be-tested object is the first object; and
wherein the first object and the second object are of the same object type, and the anomaly degree of the second object is lower than the anomaly degree of the first object.

15. An electronic device, comprising a processor and a memory, wherein:
the memory stores a computer program; and
the processor when executing the computer program implements the method according to any one of claims 1 to 9, the method according to claim 10, or the method according to claim 11.

16. A computer-readable storage medium, storing a computer program, wherein:
the computer program is configured to enable a computer to perform the method according to any one of claims 1 to 9, the method according to claim 10, or the method according to claim 11.

17. A computer program product, comprising computer instructions, wherein:
the computer instructions, when executed by a processor, implement the method according to any one of claims 1 to 9, the method according to claim 10, or the method according to claim 11.
